# EUROPEAN PATENT SPECIFICATION

(11) **EP 1 209 100 B1**
(45) Date of publication and mention of the grant of the patent: **24.03.2004**
(21) Application number: 00204180.4
(22) Date of filing: 24.11.2000
(51) Int. Cl.: B65G 17/06, B65G 17/10

(54) **Conveyor for conveying bulk material**
Förderer zum Fördern von Schüttgut
Convoyeur pour acheminer des matières en vrac

(43) Date of publication of application: 29.05.2002
(73) Proprietor: MACHINEFABRIEK BOLLEGRAAF APPINGEDAM B.V., NL-9902 AM Appingedam (NL)
(72) Inventor: Rosenthal, Dov, 1181 CE Amstelveen (NL)
(74) Representative: Prins, Adrianus Willem

(56) References cited:
- DE-C- 946 604
- FR-A- 1 112 376
- GB-A- 1 475 693
- NL-C- 1 004 871
- US-A- 4 770 291

## Description

### TECHNICAL FIELD AND BACKGROUND ART

The invention relates to a conveyor for conveying bulk material along a transport path, according to the preamble of claim 1. Such a conveyor is known, e.g. from document NL-A-1 004 871.

For transporting bulk material including hard and sharp particles, such as waste glass or scrap steel, belt conveyors are employed of which the belts are formed by successive distinct rigid carrier members, generally made of steel, which are capable of withstanding cutting and abrasive action of the material being transported.

A disadvantage of such conveyors belts resides in the complexity of the construction and the time needed to replace individual ones of the mutually linked carrier members in the event of damage.

### SUMMARY OF THE INVENTION

It is an object of the present invention to provide a conveyor belt including successive rigid carrier members which is of a simple construction.

According to the present invention, this object is achieved by providing a conveyor according to claim 1.

The primary carrier members fulfil the functions of forming a support area for the material to be transported and of supporting the secondary carrier members. Therefore, secondary carrier members can be of a relatively simple design, do not need separate supports and need only carry in the areas of the gaps between the primary carrier members.

Further objects, modes, embodiments and details of the invention appear from the dependent claims and the description in which reference is made to the drawings.

### BRIEF DESCRIPTION OF THE DRAWINGS

Fig. 1 is a schematic representation in side view of an end portion of an example of a conveyor according to the present invention;
Figs. 2 is a view according to Fig. 1 of the carrier members only;
Figs. 3 is a frontal view of a secondary carrier member of the conveyor according to Figs. 1 and 2;
Figs. 4 is a bottom view of the secondary carrier member according to Fig. 3;
Figs. 5 is a side view of the secondary carrier member according to Figs. 3 and 4;

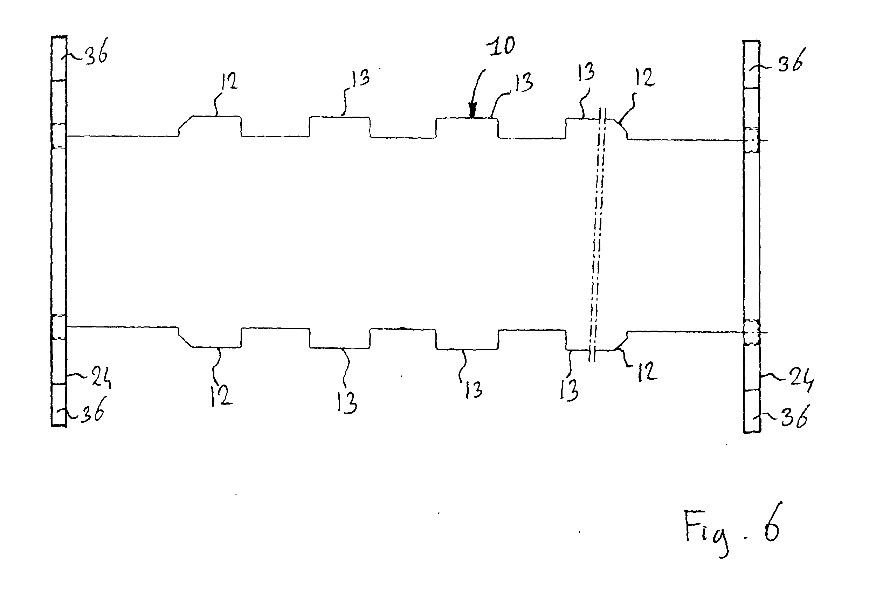

Figs. 6 is a top plan view of a primary carrier member of the conveyor according to Figs. 1 and 2;

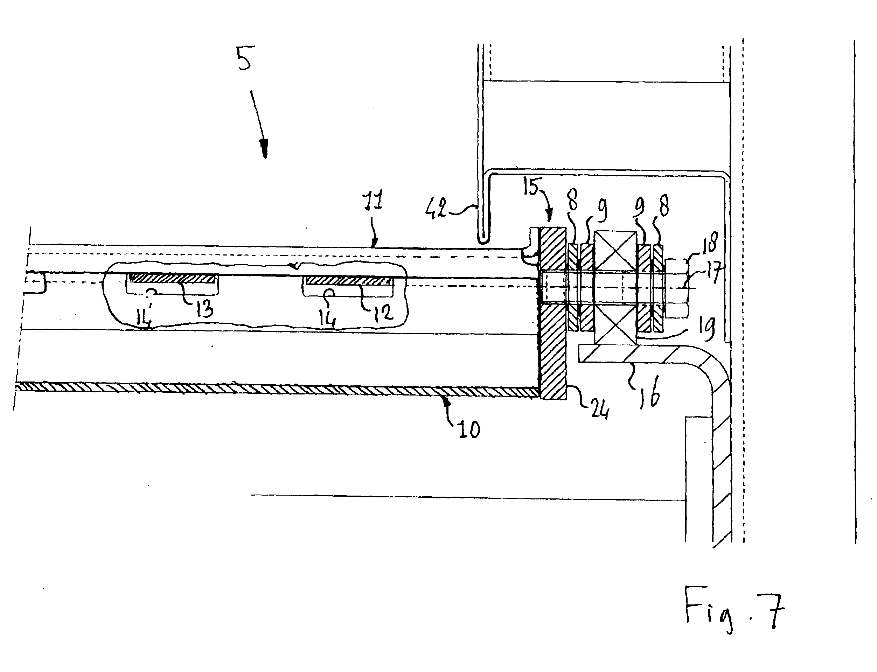

Fig. 7 is a more detailed view in cross-section along the line VII-VII in Fig. 1; and

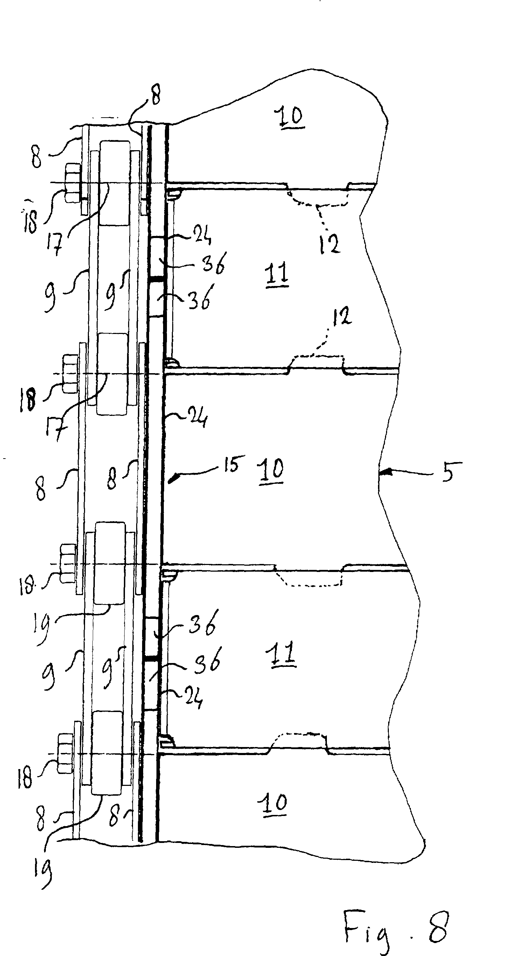

Fig. 8 is a top plan view of the conveyor according to in Figs. 1-7 with dismounted stationary sideguards.

### DETAILED DESCRIPTION

The presently most preferred exemplary embodiment of the invention is shown in the drawings. Dependent on transport requirements and operating circumstances, features such as dimensions and configuration of the transport path may vary. In various instances where the conveyor as shown includes larger numbers of mutually identical parts or portions, for the sake of clarity of the drawings, only a limited number of the parts or portions are designated by reference numerals.

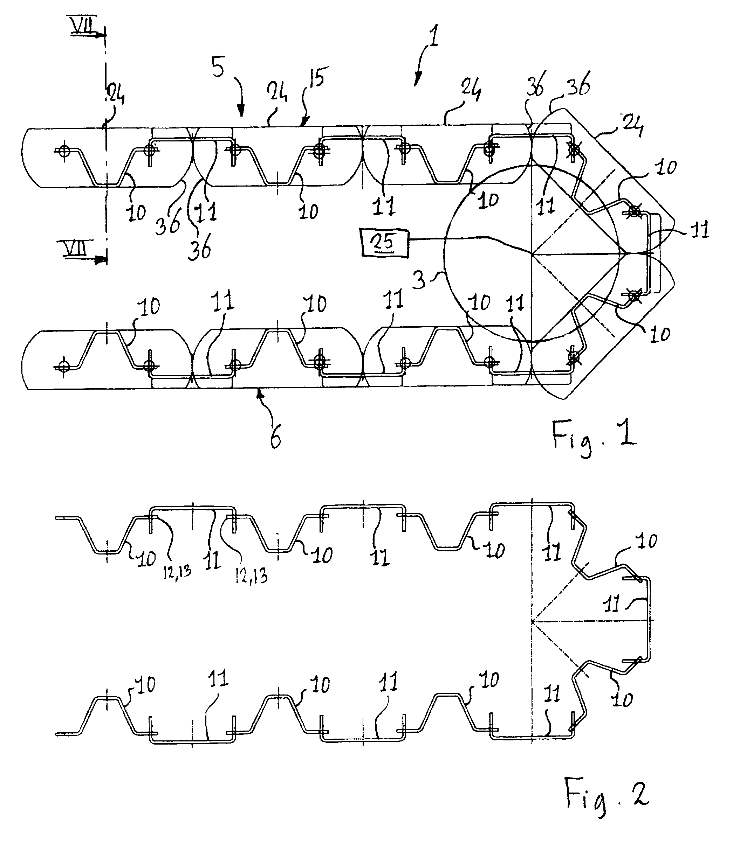

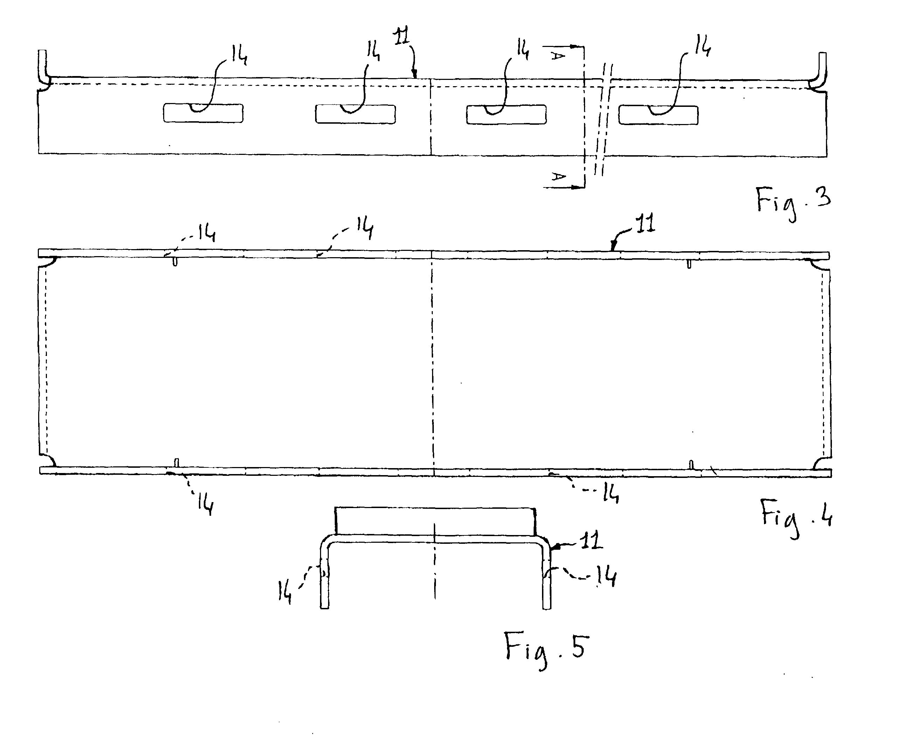

The chain conveyor 1 shown in the drawings has an endless conveyor loop extending over sprocket wheels 3 on opposite ends of the conveyor 1, only one of such ends being shown in the Figs. 1 and 2. The conveyor loop has a momentarily upward facing transport deck section 5 extending along a transport path and a momentarily downward facing return section 6 extending under the transport deck 5.

The conveyor loop includes two chains each composed of chain pins formed by bolts 18 transverse to the chain array and connections in the form of chain plates 8, 9 extending in longitudinal direction of the array and interconnecting the chain bolts 18. The conveyor loop further includes an array of separate primary carrier members 10 extending in a direction transverse to the array.

The primary carrier members 10 are each supported on opposite lateral sides of the loop, in this example via the chains but it is also possible to provide for instance that the carriers members are directly supported by rails or the like. Successive ones of the primary carrier members 10 are spaced apart in longitudinal direction of the loop.

The conveyor belt also includes an array of distinct secondary carrier members 11. Successive ones of the secondary carrier members 11 are spaced apart in longitudinal direction of the loop as well.

The primary carrier members 10 each bridge a spacing between successive ones of the secondary carrier members 11 and the secondary carrier members 11 each bridge a spacing between successive ones of the primary carrier members 10. Moreover, the secondary carrier members 11 are each supported by successive ones of the primary carrier members 10.

The primary carrier members 10 form support areas for material to be transported on the transport deck 5 and carry secondary carrier members 11. Accordingly, separate support for the secondary support members relative to the fixed support structure of the conveyor belt is not required and the secondary carriers members 11 need only carry material in the area between the primary carrier members 10 and need only be relatively small.

The primary carrier members 10 each have projections 12, 13 in longitudinal direction of the loop. The projections 12, 13 on each side of a primary carrier member 10 are engaged in recesses 14 in a neighbouring secondary carrier member 11. Thus, support and positioning of the secondary carrier members 11 relative to the primary carriers members 10 is assured in a very simple manner. Also a single projection/recess combination for each connection between primary and secondary carrier members and/or an arrangement in which some or all of the recesses are provided in the primary carrier members are conceivable. The simplicity of the engagement between successive carrier members 10, 11 substantially simplifies the operation of replacing damaged carrier members.

The carrier members 10, 11 are formed of plate material, which allows to efficiently combine the functions of withstanding loads of the material to be transported and forming a support surface for that material.

For withstanding loads of the material to be transported and to avoid material sliding down along any sloping portions of the transport deck, it is advantageous that the carrier members 10, 11 each have a profiled cross-section. It is also possible to provide this effect for some of the carrier members only, by providing only some of the carrier members with a profiled cross-section. Other carrier members can for instance be smooth or be provided with separate structures for preventing slipping of the material and to provide the required support.

The projections 12, 13 are efficiently obtained in the form of lips of the plate material of the primary carrier members 10. The height of the recesses 14 allows such vertical play between the boundaries of the recesses 14 and the lips, that the lips can pivot in the recesses when the respective carrier members 10, 11 pass about a turning point at an end of the conveyor. Thus, the required hinging action between successive carrier members is obtained in a simple manner, there is no need to maintain tight manufacturing tolerances and if any of the material being transported is caught between the recess 14 and the projection 10 or 11, this has little effect on the function of the connection and such material is easily released when the lips 12, 13 pivot relative to the recesses when the connection reaches a turning point of the conveyor loop.

In order to keep material which is deposited and transported on the transport deck section 5 of the conveyor loop from falling over the side of the conveyor loop, a side barrier 15 is provided which extends above and along a side of the transport deck 5.

The conveyor further includes a support structure with guide rails 16 for rollers 19 of the chains. For driving the circulation of the conveyor loop, a drive unit 25 is provided which is coupled to the sprocket wheel 3. A motor may be included in the drive unit 25 or power may be obtained from an external drive motor.

The side barrier 15 is formed by an array of side barrier plates 24 which are each fixedly connected relative to central axes of a pair of successive ones of the bolts 18. Successive ones of the side barrier plates 24 are connected relative to successive pairs of the bolts 18 and leading and trailing ends of successive side barrier plates 24 are in close proximity of each other so that in operation very little or no bulk material falls over the side edges of the conveyor loop.

In operation, the side barrier plates 24 move along with the conveyor loop, so that friction and wear due to relative movement between contacting portions of the conveyor loop or material transported thereon and the side barrier 15 is substantially reduced. Furthermore, the side barrier plates 24 do not move substantially in longitudinal direction relative to material which is being transported by the conveyor loop, so that a possible source of dislodgement of material travelling on the transport deck 5 is essentially eliminated.

Because the side barrier 15 is composed of an array of side barrier plates 24 the position of each of the side barrier plates 24 being determined by a successive pair of the bolts 18, the side barrier 15 can easily accommodate to a great variety of curvatures to which the conveyor loop is subjected in operation. Furthermore, because the relative movability of successive side barrier plates corresponds to the relative movability of the chain plates of the chain the side barrier plates 24 can be made of substantially rigid material such as steel. Accordingly, a particularly robust and durable construction can be obtained.

The primary carrier members 10 each interconnect diametrically opposite chain plates 8 of the chains, so that motion and relative positions of the primary carrier members 10 in circumferential sense of the loop is accurately controlled by the chains.

The primary carrier members 10 are each connected to primary ones 8 of the chain plates. The secondary chain plates 9 are each hingedly connected between successive ones of the primary chain plates 8. Thus, at least during operation, each primary carrier member 10 is fixedly connected to the primary chain plates 8 and between the primary chain plates 8 associated to successive primary carrier members 10, the secondary chain plates 9 are located to which the primary chain plates - and thereby the primary carrier members are hingedly connected. Thus, the mutual distance between successive primary carrier members 10 is accurately maintained.

The primary chain plates 8 are pivotable relative to the secondary chain plates 9 about pivot axes 17 and, at least in straight sections of the loop, faces of the carrier members 11 in which the recesses 14 are provided each co-extend with one of the pivot axes 17. Thus, when the recesses 14 rotates relative to the lip 12, 13 when the respective chain plates 8, 9 pass over a wheel at an end of the conveyor or along a portion of the conveyor belt where the slope of the transport path changes, the recesses 14 rotate about a point in or very closely adjacent the recess 14. Thus, the distance between recesses 14 of successive secondary carrier members 11 remains essentially constant. In order to ensure that the secondary carrier members 11 do not move too much in longitudinal direction of the conveyor loop, it is also provided that the proximal ends of the projections 12, 13 essentially co-extend with the pivot axes 17. Thus, also the distance between the proximal ends of the lips 12, 13 of successive primary carrier members 10, between which proximal ends the secondary carrier members 11 are retained in longitudinal direction, remains essentially constant as the respective primary carriers moves over a sprocket wheel at a turning point or over a section of the conveyor where the slope changes. Thus, the secondary carrier members 11 are reliably retained and changes in gap widths between successive carrier members remain very small.

The primary carrier members 10 each have an end face in abutment with one of the side barrier plates 24, so that material to be transported is prevented from passing in-between the primary carrier member 10 and the barrier plate 24. Furthermore, for the simplicity of construction it is advantageous that the side barrier plates 24 are directly connected to ends of the primary carrier members 10.

The lateral ends of the secondary carrier members 11 are located in close proximity to the barrier members 24, so that also loss of material due to material passing between the secondary carrier members and the barrier plates is counteracted.

Since the barrier plates are fixedly connected to the primary chain plates 8, successive barrier plates 24 are pivotable relative to each other about pivot axes 17 about which also the chain plates 8, 9 are pivotable relative to each other. End faces 36 of the side barrier plates 24 facing each other are each curved about a most adjacent one of the pivot axes 17. The distance between the end faces 36 of successive barrier plates 24 remains constant and very small as the barrier plates 24 pass over curved portions of the conveyor loop, such as over the sprocket wheel 3 or over section where the slope of the conveyor changes.

To further minimize the likelihood of material falling over the barrier 15, in the transport deck section 5, the secondary carrier elements 11 of which the lateral ends face the end portions of adjacent barrier plates 24, are located higher than the primary carrier members 10. Due to this difference in levels, material on the conveyor tends to move away from the secondary carrier members 11 and thus away from the small opening between successive barrier plates 24. Moreover, the level of the support surface of the secondary barrier plates 11 in the transport deck section 5 is such, that it is located closely adjacent the area of the end faces 36 of the barrier plates 24 where the distance between these end faces is minimal.

To ensure that also small particles are effectively kept from falling from the conveyor loop, the lateral ends of the primary carrier members 10 abut the side barrier plates 24 and are welded to the side barrier plates 24.

In the present example, the fixed position of each of the side barrier plates 24 relative to the associated bolts 18 is obtained in a particularly efficient manner, because the bolts 18 are directly connected to the side barrier plates 24. Accordingly, the bolts 18 fulfil both the functions of forming hinges of the respective chain array and of providing connections between the chain array and the central area of the conveyor loop for carrying bulk material.

The bolts 18 have threaded ends threaded in threaded bores in the side barrier plates 24 allowing the chain arrays to be connected to the side barrier plates 24 in a simple manner. That the pins of the chains are formed by bolts threaded in the barrier plates 24 further simplifies the task of replacing damaged carrier members.

The bolts 18 abut end faces of the primary carrier members 10 attached to the side barrier plates 24 so that the depth over which the bolts 18 can be screwed into the side barrier plates 24 is limited without the need of drilling blind holes in the side barrier plates 24 or providing specific measures to limit the depth over which the bolts 18 can be screwed into the side barrier plates 24.

To further reduce the risk of material inadvertently falling over the side of the transport deck 5, the conveyor 1 is provided with substantially stationary side guards 42 extending in longitudinal direction of the conveyor loop and suspended above the transport deck on a side of the side barrier plates 24 facing away from the bolts 18 and the chain array.

The carrier rollers 19 supported by guide tracks 16 and carrying the bolts 18 provide a simple construction for smoothly guiding the conveyor loop along the transport track.

To laterally guide the conveyor loop, the conveyor can include guide rollers mounted in stationary positions and having circumferential surfaces facing outside surfaces of the side barrier plates 24. Thus, the side barrier plates 24 can also contribute to lateral guidance of the conveyor loop.

From the above description it will be clear to the skilled person that within the framework of the present invention, many variations based on the proposed examples are possible. The bolts 18 can for instance be connected by any suitable type of string members, such as a toothed belt or a wire instead of by chain plates as provided according to the present examples. Guidance of the chain can for instance be achieved by a series of stationary, rotatable sprocket wheels instead of, as shown, by guide rails over which rollers can pass.

The passage of material in-between opposing end faces of the side barrier plates can also be counteracted in different manners, for instance by providing successive side barrier plates projecting past each other and having co-operating recesses and projections. Such side barrier plates of a more complex design are preferably manufactured by casting or moulding.

## Claims

1. A conveyor for conveying bulk material comprising:
a conveyor loop having a momentarily upward facing transport deck section (5) forming a transport path and a momentarily downward facing return section (6) extending under said transport deck section (5),
an array of distinct primary carrier members (10), each supported on opposite lateral sides of said loop, said array extending along said loop; **characterized by**:
an array of distinct secondary carrier members (11), successive ones of said secondary carrier members (11) being spaced apart in longitudinal direction of said loop;
wherein successive ones of said primary carrier members (10) are spaced apart in longitudinal direction of said loop;
wherein said primary carrier members (10) each bridge a spacing between successive ones of said secondary carrier members (11); and
wherein said secondary carrier members (11) each bridge a spacing between successive ones of said primary carrier members (10) and are supported by said successive ones of said primary carrier members (10).

2. A conveyor according to claim 1, wherein at least alternating ones of said carriers members (10) each have at least one projection (12, 13) in longitudinal direction of said loop engaged in a recess (14) in a neighbouring one (11) of said carrier members.

3. A conveyor according to claim 1 or 2, wherein at least some of said carrier members (10, 11) are formed of plate material.

4. A conveyor according to claim 3, wherein at least some of said carrier members (10, 11) each have a profiled cross-section.

5. A conveyor according to any one of the preceding claims, wherein said conveyor loop including a pair of chains of chain plates (8,9) hinged to each other, said chains extending along said loop on opposite lateral sides of the transport path and said primary carrier members (10) each fixedly interconnecting diametrically opposite chain plates (8) of said chains.

6. A conveyor according to claim 5, wherein said primary carrier members (10) are each connected to primary ones (8) of said chain plates, said chains further comprising secondary chain plates (9) each hingedly connected between successive ones (8) of said primary chain plates.

7. A conveyor according to claims 2 and 6, wherein said primary chain plates (8) are pivotable relative to said secondary chain plates (9) about pivot axes (17) and wherein, at least in straight sections of said loop, faces of said carrier members (11) in which said recesses (14) are provided each co-extend with one of said pivot axes (17).

8. A conveyor according to any one of the preceding claims, further including at least one side barrier (15) projecting above and along a side of said transport deck (5) for keeping bulk material from falling over a side edge of said transport deck (5), wherein said side barrier (15) is formed by an array of side barrier plates (24), said side barrier plates (24) each being fixedly connected to one of said primary carrier members (10).

9. A conveyor according to claim 8, wherein the primary carrier members (10) each have an end face in abutment with one of said side barrier plates (24).

10. A conveyor according to claim 8 or 9, wherein successive ones of said barrier plates (24) are pivotable relative to each other about pivot axes (17) and wherein end faces (36) of said side barrier plates (24) facing each other are each curved in accordance with a radius having a most adjacent one of said axes (17) as its centre.

11. A conveyor according to any one of the claims 8-10, wherein said side barrier plates (24) are directly connected to ends of the primary carrier members (10).

## Patentansprüche

1. Förderer zum Fördern von Schüttgut mit:
einer Förderschleife mit einem zeitweilig nach oben weisenden Transportdeckenabschnitt (5), der einen Transportpfad ausbildet, und mit einem zeitweilig nach unten weisenden Rücklaufabschnitt (6), der sich unter dem Transportdeckabschnitt (5) erstreckt,
einer Reihe von verschiedenen Primärträgerelementen (10), die jeweils an entgegengesetzten Querseiten der Schleife gestützt sind, wobei sich die Reihe entlang der Schleife erstreckt,
**gekennzeichnet durch:**
eine Reihe von verschiedenen Sekundärträgerelementen (11), wobei die aufeinanderfolgenden von den Sekundärträgerelementen (11) in Längsrichtung der Schleife voneinander beabstandet sind;
wobei die aufeinanderfolgenden von den Primärträgerelementen (10) in Längsrichtung der Schleife voneinander beabstandet sind;
wobei die Primärträgerelemente (10) jeweils eine Beabstandung zwischen aufeinanderfolgende Sekundärträgerelemente (11) überbrücken; und
wobei die Sekundärträgerelemente (11) jeweils eine Beabstandung zwischen den aufeinanderfolgenden von den Primärträgerelementen (10) überbrücken und **durch** die aufeinanderfolgenden von den Primärträgerelementen (10) gestützt sind.

2. Förderer gemäß Anspruch 1, wobei zumindest abwechselnde von den Trägerelementen (10) jeweils zumindest einen Vorsprung (12, 13) in die Längsrichtung der Schleife haben, der mit einem Einschnitt (14) in einem benachbarten (11) der Trägerelemente im Eingriff ist.

3. Förderer gemäß Anspruch 1 oder 2, wobei zumindest einige von den Trägerelementen (10, 11) aus Plattenmaterial ausgebildet sind.

4. Förderer gemäß Anspruch 3, wobei zumindest einige von den Trägerelementen (10, 11) einen profilierten Querschnitt haben.

5. Förderer gemäß einem der vorangehenden Ansprüche, wobei die Förderschleife ein Paar Ketten von Kettenplatten (8, 9) aufweist, die aneinander angelenkt sind, wobei sich die Ketten entlang der Schleife an entgegengesetzten Querseiten des Transportpfades erstrecken und die Primärträgerelemente (10) jeweils fixiert in Durchmesserrichtung entgegengesetzte Kettenplatten (8) der Ketten verbinden.

6. Förderer gemäß Anspruch 5, wobei die Primärträgerelemente (10) jeweils mit primären (8) von den Kettenplatten verbunden sind, wobei die Ketten des weiteren Sekundärkettenplatten (9) aufweisen, die jeweils angelenkt zwischen nachfolgenden (8) von den Primärkettenplatten verbunden sind.

7. Förderer gemäß den Ansprüchen 2 und 6, wobei die Primärkettenplatten (8) relativ zu den Sekundärkettenplatten (9) um Schwenkachsen (7) schwenkbar sind und wobei zumindest an geraden Abschnitten der Schleife Seiten der Trägerelemente (11), an denen die Einschnitte (14) vorgesehen sind, sich jeweils mit einer der Schwenkachsen (17) gemeinsam erstrecken.

8. Förderer gemäß einem der vorangehenden Ansprüche, des weiteren mit zumindest einer Seitenabdeckung (15), die oberhalb und entlang einer Seite der Transportdecke (5) vorsteht, um das Schüttgut davor zurückzuhalten, über einen Seitenrand der Transportdecke (5) zu fallen, wobei die Seitenabdeckung (15) durch eine Reihe von Seitenabdeckungsplatten (24) ausgebildet ist, wobei die Seitenabdeckungsplatten (24) jeweils fixiert mit einem von den Primärträgerelementen (10) verbunden sind.

9. Förderer gemäß Anspruch 8, wobei die Primärträgerelemente (10) jeweils eine Endseite im Anstoß mit einer von den Seitenabdeckungsplatten (24) haben.

10. Förderer gemäß Anspruch 8 oder 9, wobei die aufeinanderfolgenden von den Abdeckungsplatten (24) relativ zueinander um Schwenkachsen (17) schwenkbar sind und wobei Endseiten (36) von den Seitenabdeckungsplatten (24), die zueinander ausgerichtet sind, jeweils mit einem Radius gekrümmt sind, der eine am nächsten angrenzende von den Achsen (17) als seine Mitte hat.

11. Förderer gemäß einem der Ansprüche 8 bis 10, wobei die Abdeckungsplatten (24) direkt mit Enden der Primärträgerelemente (10) verbunden sind.

## Revendications

1. Un convoyeur pour acheminer des matières en vrac comprenant : -
une boucle de convoyeur ayant une section (5) de plateau de transport en regard vers le haut de manière momentanée formant un chemin de transport, et une section (6) de retour en regard vers le bas de manière momentanée s'étendant au-dessous de la section (5) de plateau de transport,
un arrangement de premiers organes porteurs distincts (10), chacun étant porté sur les côtés latéraux opposés de ladite boucle, ledit arrangement s'étendant le long de ladite boucle ,
**caractérisé par** un arrangement de seconds organes porteurs distincts (11), lesdits seconds organes porteurs successifs étant espacés les uns des autres selon la direction longitudinale de ladite boucle ;
dans lequel lesdits premiers organes porteurs (10) successifs sont espacés les uns des autres selon la direction longitudinale de ladite boucle ;
dans lequel lesdits premiers organes porteurs (10) forment chacun un pont au-dessus d'un espace entre des seconds organes porteurs successifs (11), et
dans lequel lesdits seconds organes porteurs (11) forment chacun un pont entre des premiers organes porteurs (10) successifs et sont portés par lesdits premiers organes porteurs (10) successifs.

2. Un convoyeur selon la revendication 1,
dans lequel au moins lesdits organes porteurs (10) alternés possèdent chacun au moins un prolongement (12, 13) en direction longitudinale de ladite boucle engagé dans un évidement (14) un organe voisin (11) desdits organes porteurs (11).

3. Un convoyeur selon la revendication 1 ou 2,
dans lequel au moins certains desdits organes porteurs (10, 11) sont conformés en matériau plat.

4. Un convoyeur selon la revendication 3,
dans lequel au moins certains desdits organes porteurs (10, 11) possèdent chacun une section transversale profilée.

5. Un convoyeur selon l'une quelconque des revendications précédentes,
dans lequel ladite boucle de convoyeur comprend une paire de chaînes de plaques (8, 9) de chaîne articulées l'une à l'autre, lesdites chaînes s'étendant le long de ladite boucle sur les côtés latéraux opposés du chemin de transport et lesdits premiers organes porteurs (10) étant chacun interconnecté de manière fixe aux plaques (8) de chaîne diamétralement opposées desdites chaînes.

6. Un convoyeur selon la revendication 5,
dans lequel lesdits premiers organes porteurs (10) sont chacun relié aux premières plaques (8) desdites plaques de chaîne, lesdites chaînes comprenant en outre des secondes plaques (9) de chaîne chacune reliée de manière articulée entre des plaques (8) successives desdites premières plaques de chaîne.

7. Un convoyeur selon les revendications 2 et 6,
dans lequel lesdites premières plaques de chaîne (8) sont entraînables à pivotement par rapport auxdites secondes plaques de chaîne (9) autour d'axes de pivotement (17) et, dans lequel au moins dans des sections droites de ladite boucle, les faces desdits organes porteurs (11) dans lesquelles lesdits évidements (14) sont réalisés, sont prévues chacune en aligement avec l'un desdits axes de pivotement (17).

8. Un convoyeur selon l'une quelconque des revendications précédentes, comprenant en outre au moins une barrière latérale (15) dépassant au-dessus et le long d'un côté dudit plateau de transport (5) pour empêcher le matériau en vrac de tomber par dessus le bord latéral dudit plateau de transport (5), dans lequel ladite barrière latérale (15) est formée d'un arrangement de plaques de barrière latérales (24), lesdites plaques de barrière latérales (24) étant chacune reliée de manière fixe à l'un desdits premiers organes porteurs (10).

9. Un convoyeur selon la revendication 8,
dans lequel les premiers organes porteurs (10) possèdent chacun une face d'extrémité en butée avec l'une desdites plaques de barrière latérales (24).

10. Un convoyeur selon la revendication 8 ou 9,
dans lequel des plaques de barrière (24) successives sont entraînables en pivotement l'une par rapport à l'autre autour des axes de pivotement (17) et
dans lequel les faces d'extrémiré (36) desdites plaques de barrière latérales (24) se faisant face l'une l'autre sont chacune courbée selon un rayon ayant comme centre le plus proche desdits axes (17)

11. Un convoyeur selon l'une quelconque des revendications 8-10,
dans lequel lesdites plaques de barrière latérales (24) sont directement connectées aux extrémités desdits premiers organes porteurs (10).
